(19) Europäisches Patentamt

European Patent Office

Office européen des brevets

(11) **EP 1 085 812 B1**

(12) **EUROPEAN PATENT SPECIFICATION**

(45) Date of publication and mention
of the grant of the patent:
**10.09.2003  Bulletin 2003/37**

(51) Int Cl.[7]: **A01N 65/00**

(86) International application number:
**PCT/IE98/00037**

(21) Application number: **98924535.2**

(22) Date of filing: **20.05.1998**

(87) International publication number:
**WO 99/059414 (25.11.1999 Gazette 1999/47)**

(54) **POTATO CYST NEMATODE CONTROLLING FACTORS AND THEIR USE IN AGRICULTURE**

FAKTOREN ZUR KONTROLLE VON KARTOFFELZYSTENNEMATODEN UND DEREN
VERWENDUNG IN DER LANDWIRTSCHAFT

FACTEURS PERMETTANT DE LUTTER CONTRE LE NEMATODE A KYSTE DE LA POMME DE
TERRE ET LEURS UTILISATIONS EN AGRICULTURE

(84) Designated Contracting States:
**AT BE CH CY DE DK ES FI FR GB GR IE IT LI LU
MC NL PT SE**

(43) Date of publication of application:
**28.03.2001  Bulletin 2001/13**

(73) Proprietors:
  • **Enterprise Ireland (trading as BioResearch
    Ireland)
    Dublin 9 (IE)**
  • **University College Cork - National University of
    Ireland, Cork
    Cork (IE)**

(72) Inventors:
  • **JONES, Peter Wyn
    Cork (IE)**

  • **DEVINE, Kenneth John
    Cork (IE)**

(74) Representative: **Ryan, Anne Mary et al**
  **c/o Anne Ryan & Co.
  60 Northumberland Road
  Ballsbridge Dublin 4 (IE)**

(56) References cited:
  • **DEVINE K.J. ET AL: "Resolution of natural hatch
    factors for goden potato cyst nematode,
    Globodera rostochiensis." ANNALS OF
    APPLIED BIOLOGY, vol. 129, 1996, pages
    323-343, XP002092025 cited in the application**

## Description

This invention relates to semiochemicals and to the manipulation thereof in controlling and combating the effects of nematodes, more especially potato cyst nematodes (PCNs).

Background Art

Semiochemicals are chemicals which affect or modify the behaviour of an organism.

PCNs, especially *Globodera rostochiensis* and *G. pallida*, are the principal pests of potato crops in Europe, causing annual losses estimated at 300 million ECU in E.U. Member States. These losses occur despite the implementation of integrated pest management (IPM), based on PCN-resistant potato varieties, crop rotation and the use of nematicides. The current E.U. market for nematicide sales for PCN control is 40 million ECU p.a., but risks of nematicide residues in groundwater and ware tubers has already lead to a temporary removal of one nematicide for use on potatoes in the U.S.A. The likely implementation of a ban on potato nematicides in the E.U. will require the development of alternative, environmentally-sound PCN control strategies which can be integrated with crop rotations and the cultivation of resistant varieties.

At potato harvest, PCN remains in the soil in the form of cysts which become detached from the roots of the plants. Each cyst contains up to 600 eggs and each egg contains one juvenile nematode. The success of PCN as a specialist pest of potatoes lies in the fact that nematodes within the cysts are stimulated to hatch by host-specific root-produced chemicals ("hatching factors", HFs).

The effects of PCNs are noticeable above ground as yellowing, stunting and wilting of the foliage. The PCNs feed on the potato roots, resulting in a major reduction in the yield from an infected crop. In Western Europe, potatoes are used not only as a food, but also as a source of starch for use in various industries, such as the chemical and plastics industries.

A class of PCN semiochemicals has been distinguished in potato root diffusate or leachate, namely one or more hatching factors. Indeed, in nature juveniles of two species of potato cyst nematode, *Globodera rostochiensis* and *Globodera pallida*, hatch in response to hatching factors present in root diffusate from potato and related plants such as tomato. The juveniles are protected from the effects of traditional agrichemicals by the cysts and the shells. Nematicides are designed to affect the movement of hatched juveniles; by chance, they also interfere with HF-induced hatch. The unhatched juveniles are resistant to adverse environmental conditions such as low temperature and dryness and can remain dormant in the soil for considerable periods of time. The hatching of eggs from cysts of the golden potato cyst nematode, *G. rostochiensis*, occurs in the presence of host plant root leachate (Perry, R. N., (1989), Parasitology Today 5:377-383). Such leachate contains several chemicals which appear to alter the permeability of the eggshell membrane causing trehalose to leak from the egg and water to move inwards, resulting in rehydration of the second-stage juvenile ($J_2$) and contributing to the eclosion of the nematode (Perry, R.N., (1978), Agricultural Research Council Research Review 4:79-83).

EP-A 0 434 417 discloses a method for the production of a substance which is capable of stimulating the hatching of eggs of PCNs which involves culturing root cells of plants of the Solanaceae family on a medium. The hatching rate (%) of eggs in the presence of varying dilutions of a root culture solution was determined *in vitro.* However, hatching activity was not determined *in vivo* in soil.

WO 93/02083 discloses a hatching agent for hatching PCN which has a molecular weight of 498, a composition $C_{27}H_{30}O_9$ and which is assigned the systematic name *trans*-2-(2-,13-dihydroxy-9-methoxy-7,7,16-trimethyl-5,10,20-trioxo-19-oxahexacyclo [9.7.0.1$^{3,6}$.0$^{3,8}$.1$^{12,16}$]-eicosa-1(11),8-dien-15-yl) cyclopropanecarboxylic acid. The hatching agent is indicated to be active in aqueous solutions or as a solid in a concentration ranging from 0.01 - 1000mg/kg soil with the optimum ranging from 1 - 100mg/kg soil. The hatching agent is indicated to be unstable at pH below 2 and above 7 and at temperatures above about 35°C.

Devine, K.J. *et al* (Ann. Appl. Biol. (1996), *129*:323-331) demonstrated the presence of multiple hatching factors in potato root leachate. At least ten hatching factors were isolated from potato root leachate by a combination of gel permeation and ion-exchange chromatography.

Accordingly, there is a requirement for agents which can be used in controlling and combatting the effects of PCNs which are stable, can be applied in relatively low concentrations to unplanted and planted soils and which overcome the current problems of nematicide residues hereinabove discussed.

Disclosure of Invention

The invention provides a hatch-inactive stimulating agent capable of stimulating hatching factor-induced hatch-in potato cyst nematodes, obtainable from the root leachate of plants of the Solanaceae family by fractionation on a Sephadex G-10 column and having a Kav distribution coefficient in the range of 0.5 to 3.0.

As will be demonstrated below, the hatch-inactive stimulating agent in accordance with the invention can potentiate the effects of HFs against the two species of PCN *G. rostochiensis and* G. *pallida* permitting the use of lower amounts of active ingredient per hectare of infected soil relative to known HF preparations to achieve higher levels of PCN hatch and control.

The stimulating agent according to the invention is obtainable from potato root leachate.

The stimulating agent according to the invention is also obtainable from tomato root leachate.

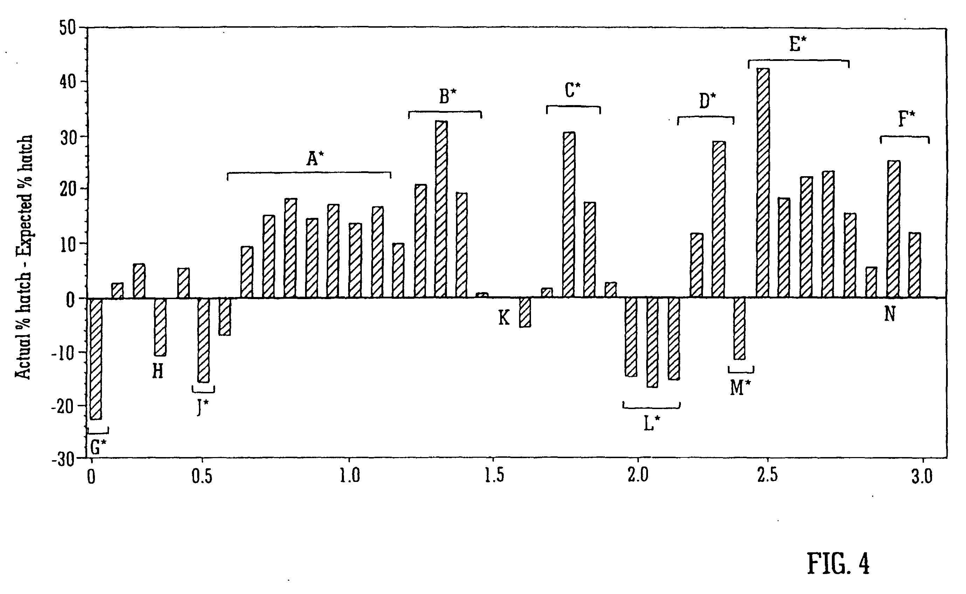

The stimulating agent according to the invention preferably has a Kav distribution coefficient of which, following elution from a Sephadex G-10 column, is within the range 0.5 to 3.0 as depicted in Fig. 4 of the accompanying drawings.

The invention also provides a hatching factor preparation for use in the control of potato cyst nematode which contains one or more hatching factor(s) and a stimulating agent as hereinbefore described, but which is free of any hatching inhibitors, said hatching inhibitors being removed from the leachate by passage of the leachate through polyvinylpolypyrrolidone (PVPP) followed by removal of any hatch-inhibitory levels of inorganic salts from the eluate.

Preferably, the hatching factor is selected from a glycoalkaloid and a terpenoid.

The PVPP binds HIs but not HFs or HSs. When the eluant resulting from the passage of PRD through PVPP is applied to Amberlite XAD-4 (Amberlite is a trade mark) the HFs and HSs bind to the Amberlite XAD-4. Aqueous washing of the column removes hatch-inhibitory levels of inorganic salts and the HFs and HSs can be recovered quantitatively by elution with methanol, followed by rotary evaporation as hereinafter demonstrated in the Examples.

Preferably, the hatching factor preparation according to the invention is stable at a temperature greater than about 35°C, more especially greater than 60°C.

The fact that the hatching factor preparation according to the invention is stable at temperatures above about 60°C allows for storage under uncontrolled conditions.

Further, preferably the activity of the hatching factor preparation according to the invention is reduced at a pH above about 9.0, relative to its activity at a pH in the range 5.0 - 8.0.

Further, preferably the hatching factor preparation according to the invention is capable of achieving a maximum kill of 70-80% of a viable potato cyst nematode egg population when the preparation is applied to a locus at a concentration of 5-30g *per* hectare, more especially 10-20g *per* hectare. These concentrations refer to active ingredient (or HF equivalent) corresponding to the usual way in which agrochemical dosage is expressed.

It will be appreciated, therefore, that the hatching factor preparation according to the invention is distinguished over the hatching agent of WO 93/02083 in a number of advantageous respects.

When the hatching factor preparation according to the invention is applied to infested soil as a liquid or in a solid formulation and incorporated to 10-20cm depth in the spring, consistently high rates of hatch of both PCN species have been achieved.

In the case of solid formulations, different particle sizes can be used to permit differential time-release of HF into the soil.

The optimum concentration of the hatching agent used in accordance with WO 93/02083 is 1-100mg/kg soil as indicated above. In the case of the present invention the optimum concentration is 10-20μg/kg soil. The higher specific activity (hatching activity *per* unit preparation weight) of the hatching factor preparation in accordance with the invention has advantages for the farmer (ease of application) and the environment (with much smaller amounts of chemical (albeit natural) applied to the soil).

The principal way in which the hatching factor preparation in accordance with the invention controls PCN is by achieving suicide hatch. However, partial hatch can also be an important component of PCN kill. "Partial hatch" occurs when conditions (e.g. HF dosage reaching the eggs) is insufficient to cause complete hatch, but permits partial dehydration of the juveniles, which become much more stress susceptible. The result is reduced % of viable eggs in the PCN population. HF treatment of infested soil in the absence of potatoes causes PCN population control by a) reducing the number of unhatched eggs ("suicide hatch") and b) reducing the % of viable unhatched eggs ("partial hatch").

It has been found that the HSs in accordance with the invention can act selectively on particular HFs.

Thus, in one embodiment the species of potato cyst nematode is *Globodera rostochiensis* and the hatching factor is a glycoalkaloid hatching factor and/or a terpenoid hatching factor having a molecular weight of 530.

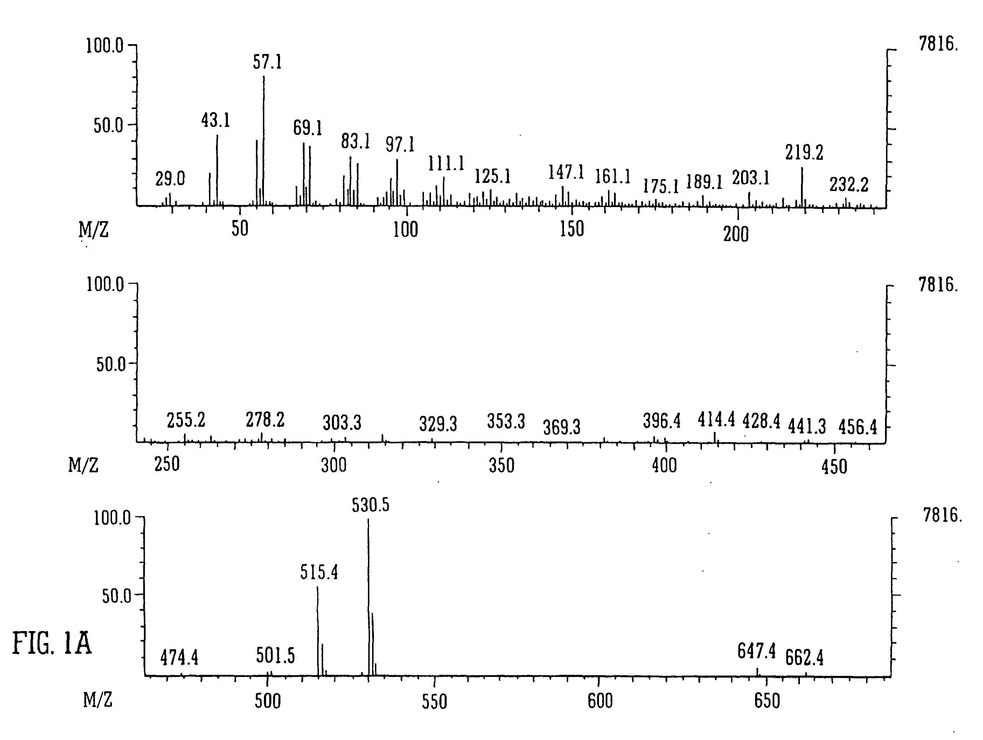

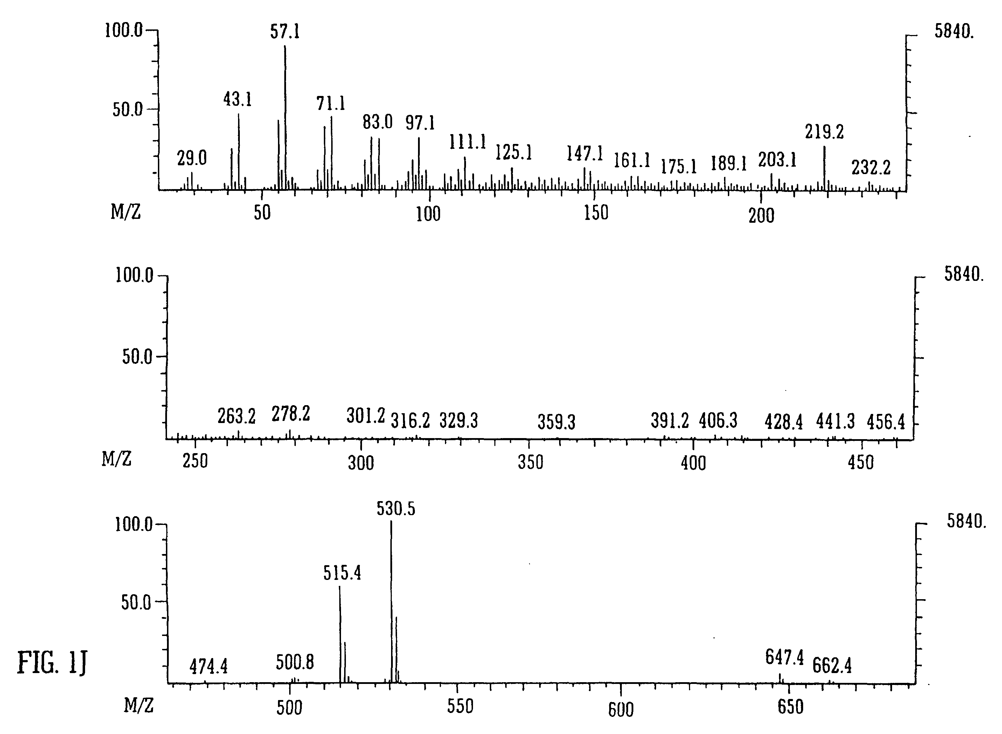

A number of terpenoid HFs having a molecular weight of 530 were determined. Each has a unique (but slightly different) mass spectrum profile as a result of minor structural modifications, for example methylation and different positioning of double bonds. The mass spectra for these hatching factors, ten in all, are depicted in Fig. 1 A-J.

In an alternative embodiment, the species of potato cyst nematode is *Globodera pallida* and the hatching factor is a terpenoid hatching factor having a molecular weight of 279.

The invention also provides a method of controlling potato cyst nematodes, which comprises applying to a locus of potato cyst nematode infestation a preparation in accordance with the invention as herein described.

It will be appreciated that a further aspect of the invention could be a method of controlling PCNs at a locus, which method comprises applying to said locus a PCN hatching inhibitor preparation in the presence of a potato crop so as to inhibit hatching of live PCNs during the growth of the potato crop.

Brief Description of Drawings

In the accompanying drawings:

Fig. 1 A-J represent mass spectra for terpenoid HFs of molecular weight 530 described herein;

Fig. 2 represents time course of in-soil and *in vitro* hatch of *G. rostochiensis* in response to four potato varieties.

Fig. 3 is a graph of % J2 hatched *versus* Kav value of hatching activity resolved following fractionation of PRL on Sephadex G-10;

Fig. 4 is a graph of actual % hatch minus expected % hatch versus Kav value for HI and HF activities (using PRL as standard) following Sephadex G-10 fractionation of PRL.

Fig. 5 is a graph of actual % hatch minus expected % hatch *versus* Kav value for HI and HS activities (using picrolonic acid as standard ) following separate Sephadex-10 fractionation of PRL;

Fig. 6 is a graph of actual % hatch minus expected % hatch versus Kav value for HS activities (using PRL as standard) following Sephadex G-10 fractionation of PRL;

Fig. 7 is a graph of % J2 hatched *versus* Kav value demonstrating the effect on hatching activity of the addition of a PRL HS fractions following elution of PRL from Sephadex G-10;

Fig. 8 is a graph of total HI or HF activity (as % J2 hatched)/net % *in vitro* hatch of leachate *versus* days from plant emergence as described in Example 4; and

Fig. 9 is a graph of actual % hatch minus expected % hatch *versus* glycoalkaloid concentration (M) as described in Example 5.

Modes for Carrying Out the Invention

Example 1

In-soil effects of hatching chemicals

Before fractionating PRL in an attempt to isolate different classes of hatching chemicals which may play a role in the hatching process of PCN in the soil, it was important to determine whether in *vitro* hatch studies reflected the in-soil situation. A comparison on the in *vitro* and in-soil hatch of PCN induced by four potato varieties was conducted.

Nematodes

Single-generation cysts of *G. rostochiensis* pathotype Ro-1 were used throughout. Cysts were pre-soaked on filter paper discs saturated with distilled water in petri dishes at 22°C for seven days prior to use.

Potato variety trial (in-soil hatch)

Sachets (5cm x 5cm) of cysts, each containing 100 pre-soaked cysts, were constructed from milk filter socks (Manus Master 6I filter, Chemical Services Ltd., Dublin) and placed on 4cm of washed gravel in 18cm pots. More gravel was added with one tuber placed in each pot at 3.5cm above the sachet, and the pots were then filled with gravel. Twenty five tubers of each of the four varieties (Golden Wonder, Maris Piper, Desirée and Pentland Dell) were planted, plus 25 control pots containing sachets but no tubers. The pots were placed in a glasshouse (minimum temperature of 18°C). The pots were watered three times *per* week with 500ml of water containing a proprietary nutrient solution (N 10:P 4.4K 22/.5; Phostrogen, Corwen, U.K.). Each week, starting two weeks after shoot emergence, the plants and sachets from five pots of each variety plus the sachets from five control pots were harvested. A total of five harvests were made, the last being on plants 6 weeks after shoot emergence.

To calculate percentage in-soil hatch, test samples of ten cysts from each sachet were placed in 200µl distilled water in an eppendorf tube and crushed. The contents were suspended using a vortex mixer and the mean number of full eggs in three 20µl subsamples was calculated (X: "remaining egg number"). The mean number of full eggs *per* cyst for the initial inoculum was calculated (Y: "intial egg number") and the percentage hatch was expressed as

$$\frac{[(Y-X)-(Y - \text{control egg number})] \times 100}{\text{initial egg numbers}}$$

where "control egg number was the mean number of eggs *per* cyst in the control (no-plant) pots for the same week as the test sample (plus-plant).

At each harvest, the intact plants were gently removed from the gravel, and the roots were placed in tubs containing 100ml water. The root leachates were collected 24 h later and assayed over a range of dilutions for hatching activity using the method of Twomey, U. *et al.* ((1995) *Nematologica 41:258-268*).

The Log-Activity (LA) values were determined from the downward portion of the hatching dose-response curve (Fenwick, D.W. (1952) *Annals of Applied Biology 39:457-467*) for the leachate. In the *in vitro vs.* in-soil correlation analysis, the *in vitro* hatch value for each harvest was presented as the sum of the LA values up to (and including) that harvest (cumulative LA).

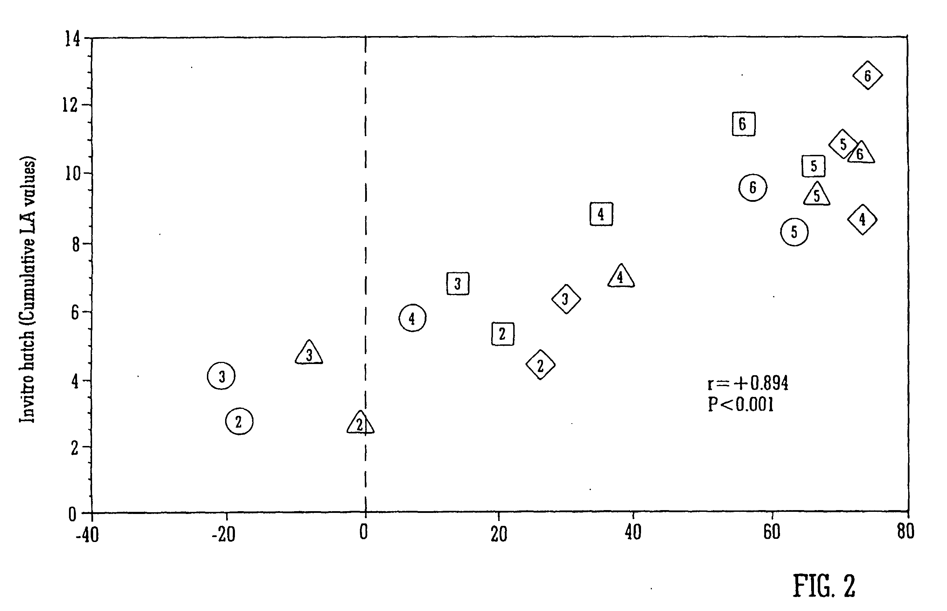

A significant positive correlation (r=0.894: P<0.001) was obtained between *in vitro* and in-soil hatch as shown in Fig. 2, supporting the extrapolation of data from *in vitro* studies to the in-soil situation.

Fig. 2 represents a time course of in-soil and *in vitro* hatch of *G. rostochiensis* in reponse to four potato varieties; Maris Piper (○), Golden Wonder (∆), Pentland Dell (◊) and Desirée (□). The broken line represents control (water) hatch. The number inside the symbol represents the number of weeks after shoot emergence the leachate was collected. The in-soil hatching response of *G. rostochiensis* to two of the potato varieties ("Maris Piper" and 'Golden Wonder') in the first two weeks of the experiment was significantly less than that of the water control: this suggests the presence of hatching inhibitors (HIs) in "early" root leachate. Studies were then conducted to determine whether such chemicals could be isolated from PRL, as described in Example 2.

Example 2

Resolution of HFs, HIs and HSs

Hatching chemical fractionation and assay

PRL was collected from 2- to 4-week old plants of potato cv. Kerrs Pink grown in gravel under glasshouse conditions (Twomey, U. *et al*. (1995) *supra*).

PRL was fractionated on a Sephadex G-10 column (2 x 43cm) according to the method of Devine, K.J. *et al.* ((1996) *supra*).

The distribution coefficients (Kav) of eluting chemicals were calculated as

$$Kav = \frac{Ve\text{-}Vo}{Vt\text{-}Vo}$$

where Ve = elution volume of test material, Vo = void volume and Vt = total bed volume of the column.

An aliquot of PRL was fractionated by low pressure liquid chromatography of Sephadex G-10, and each fraction was assayed for activity of HFs, HIs and HSs.

Bioassay of all three classes of hatching chemical (HF, HI, HS) in Sephadex G-10 fractions was based on the microtitre plate assay method of Twomey, U. *et al*. ((1995) *supra*). Hatching activity was calculated as the percentage of viable $J_2$ which hatched from five cysts after incubation for seven days in the test sample at 22°C with at least two replicate assays of each sample.

For the assay of HF activity, the hatching activity of each fraction was assayed using the method of Twomey, U. *et al.* ((1995) *supra*) at three concentrations: original concentration. 1:10 and 1:100 dilution.

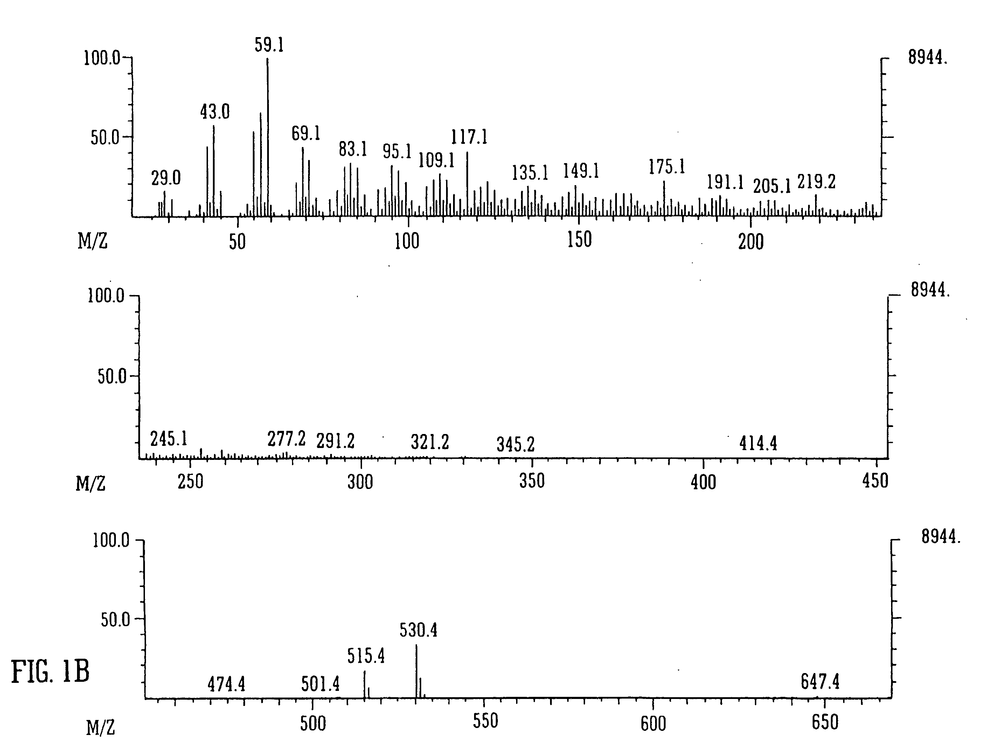

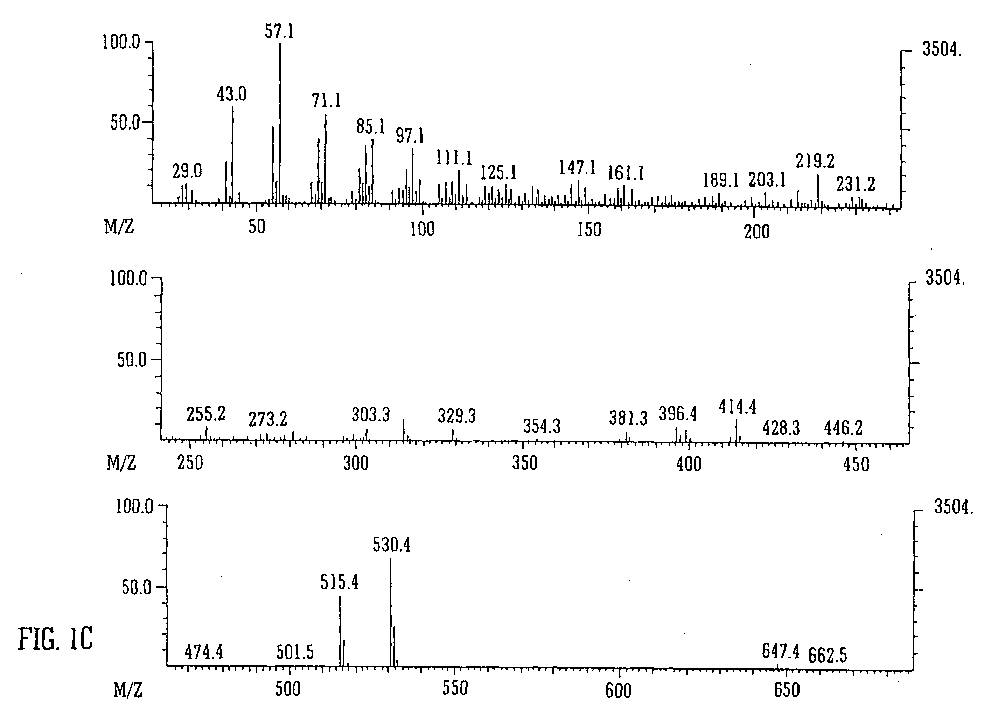

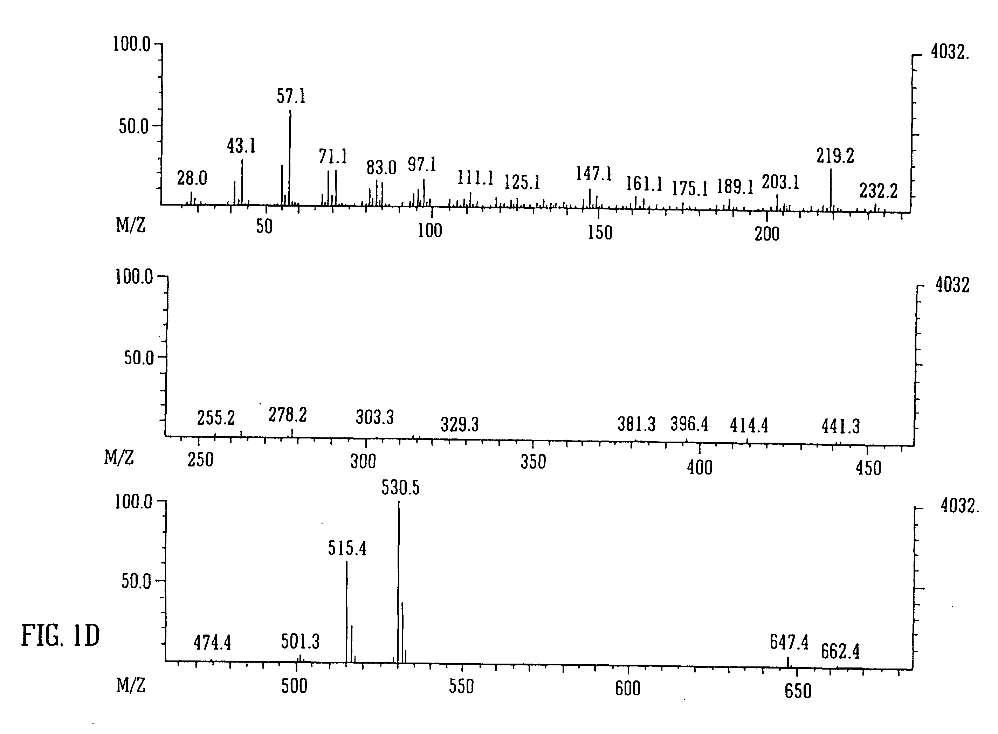

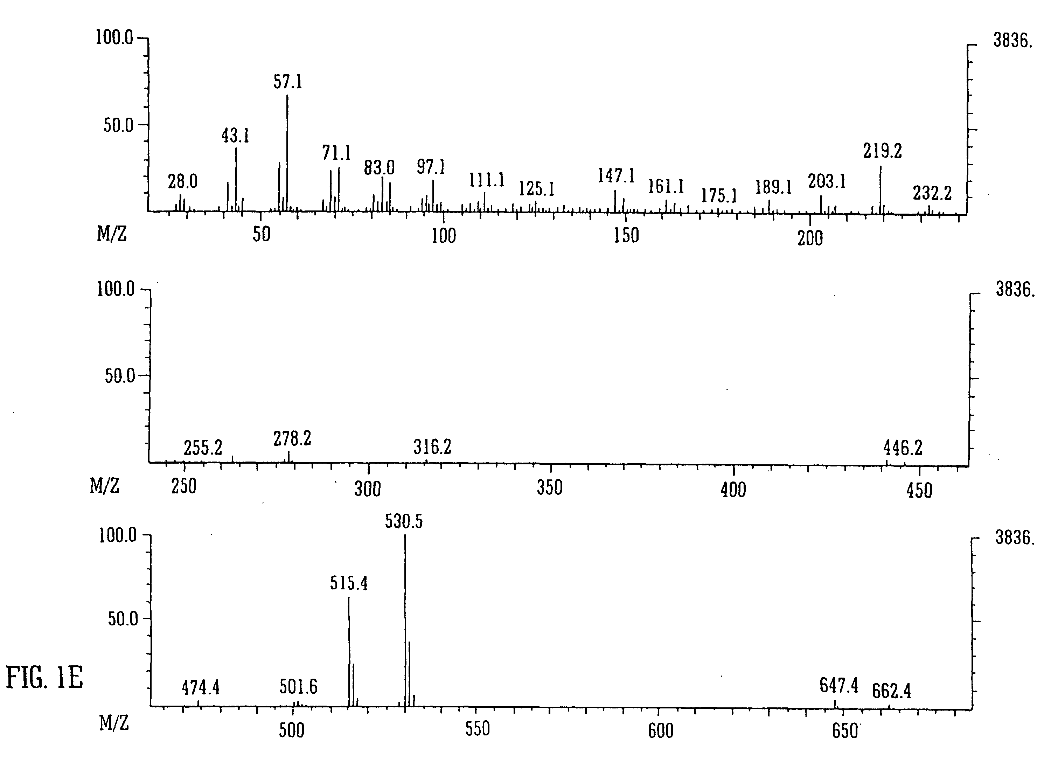

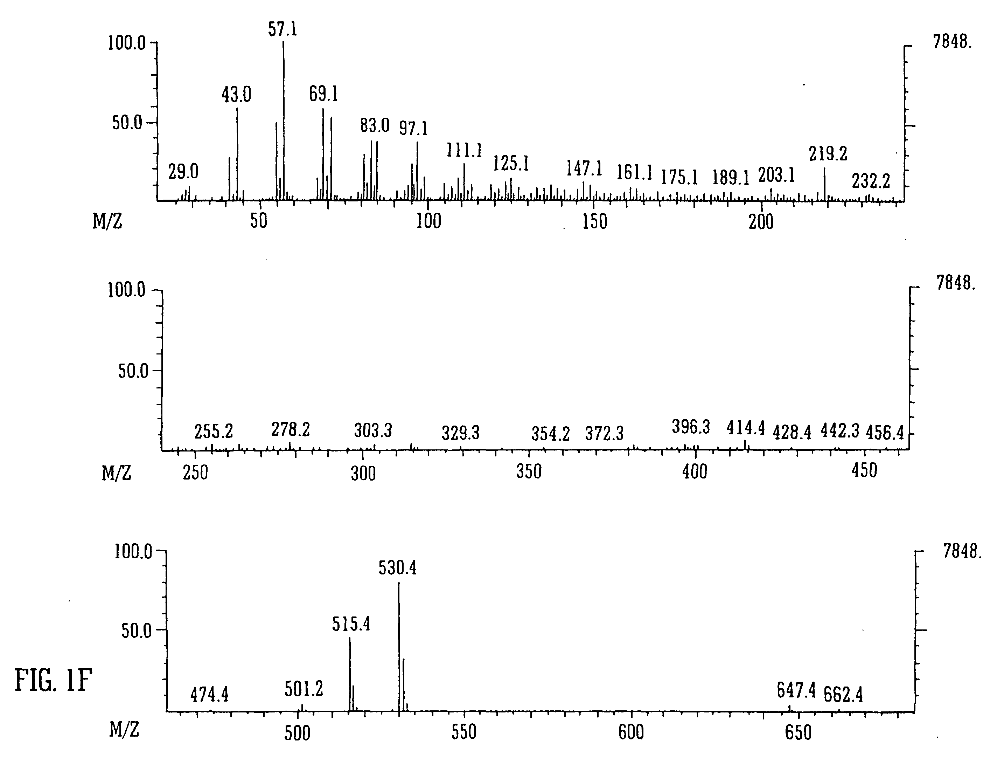

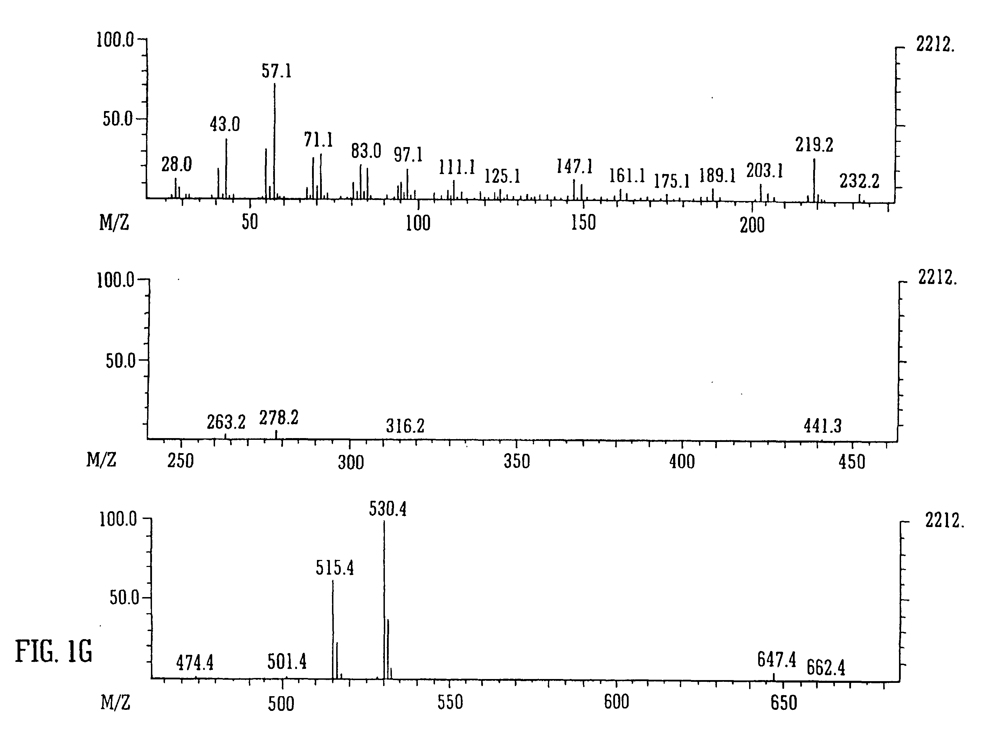

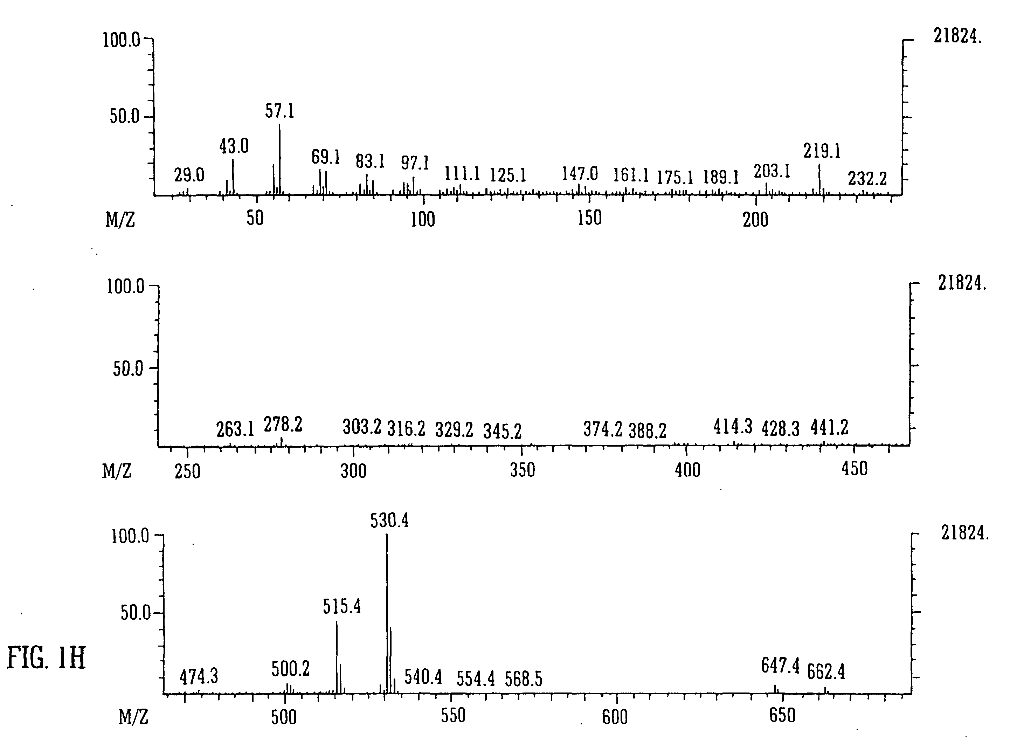

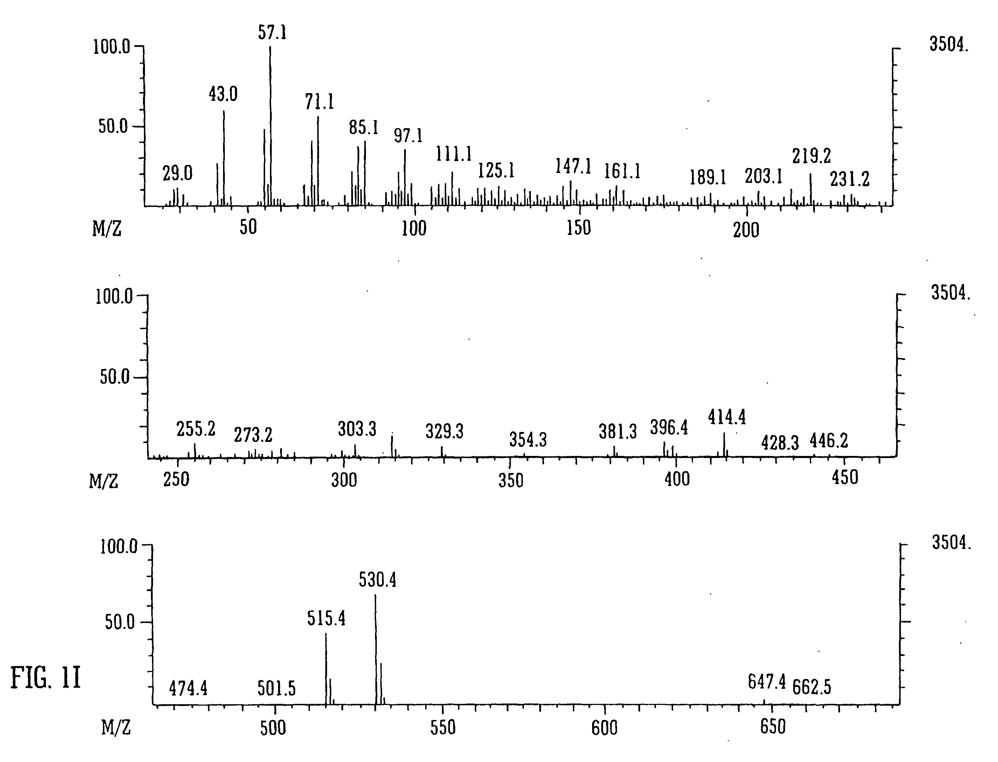

To detect HI and HS activity after chromatography of root leachate, each PRL fraction was assayed (at 1:100 dilution) for hatching activity in the presence of a PRL spike: this spike corresponded to a point approximately half-way down the linear portion of the PRL dosage-hatch response bioassay curve (Fig. 1 in Devine, K.J. *et al.* ((1996) *supra*) and meant that both inhibition (due to HIs) and stimulation of hatch (due to HSs) could be detected in a single assay.

Thus, for the assay of HI and HS activities, hatching activity (Twomey, U. *et al.* (1995) *supra)* was determined in 200µl aliqouts of the following preparations:

A. 1.3ml fraction aliquot (1:100 dilution)

B. 1.2ml fraction aliquot (1:100 dilution) plus either a 100μl PRL aliquot (1:200 dilution: "PRL spike") or a 100μl picrolonic acid (1mg ml$^{-1}$: "picrolonic acid spike"):

C. 1.2ml running buffer aliquot, plus either a 100μl PRL aliquot (1:200 dilution) or 100μl picrolonic acid aliquot (1mg ml$^{-1}$).

Any fraction where B hatch was significantly (P<0.05) less than the sum of A and C hatches was deemed to contain HIs. Any fractions where B hatch was significantly (P<0.05) greater than the sum of A and C hatches was deemed to contain HSs.

To investigate the effect of a single HS fraction on the activity of different HFs present in PRL, the PRL Sephadex G-10 fractions corresponding to the HS eluting at Kav 2.40-2.53 were pooled. PRL was then chromatographed on Sephadex G-10 into 25 x 8ml fractions (compared to the usual 40 x 4ml fractions) and a 100 μl aliqout of a 1:50 dilution of each fraction was assayed for hatching activity in the presence of 100μl aliquot of either the HS preparation or elution buffer.

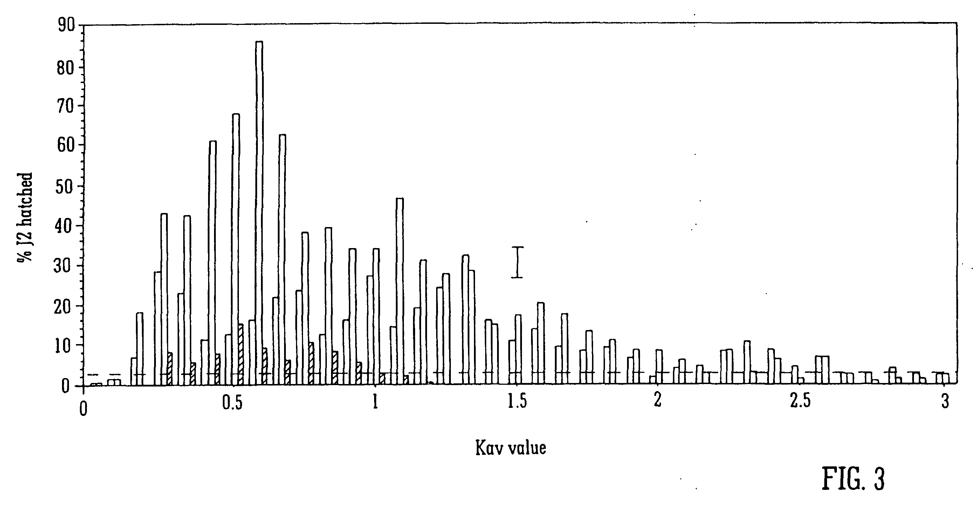

The HF profile (Fig. 3) was similar to that reported by Devine, K.J. *et al.* ((1996) *supra*) the ion-exchange capacity of Sephadex G-10 resulting in elution of active molecules at Kav distribution coefficients greater than 2.5.

Fig. 3 represents hatching activity resolved following fractionation of PRL on Sephadex G-10: original fraction concentration (□), 1:10 dilution (□) and 1:100 dilution (■). The error bar represents LSD (P 0.05) and the broken line refers to hatch in the presence of elution buffer. When each fraction was assayed for hatching activity in the presence of the PRL spike as shown in Fig. 4, four zones of HI activity (hatch levels significantly below those of the PRL spike) and six zones of HS activity (hatch levels significantly above the combined hatches of the fraction and PRL spike) were detected.

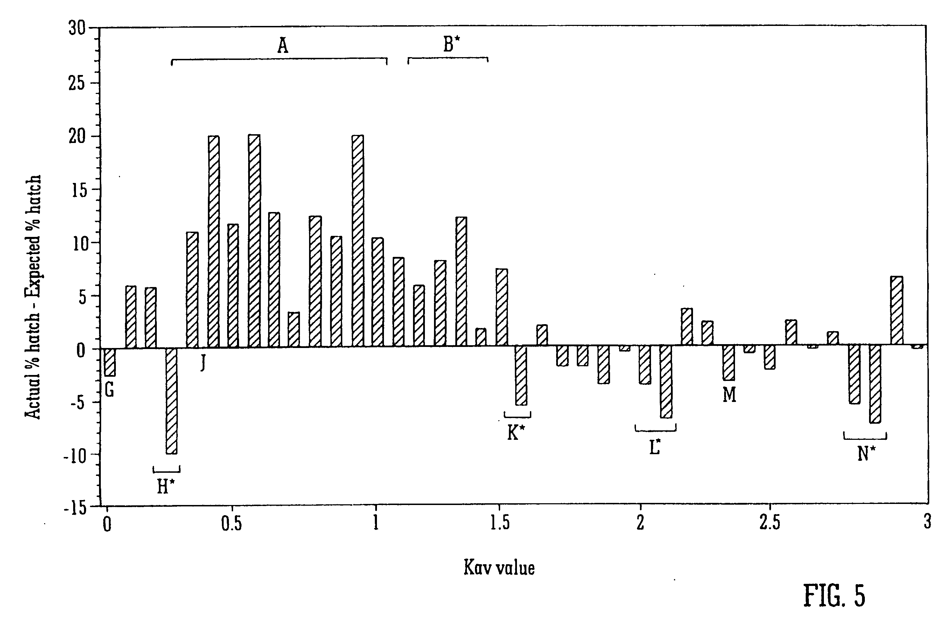

Fig. 4 shows HI and HS activities (using PRL as standard) following Sephadex G-10 fractionation of PRL. Bars represent actual hatching activity (PRL fraction + PRL aliquot) minus expected hatching activity ([PRL fraction only] + [PRL aliquot only]). Bracketed fractions with letters represent zones of HS activity (actual hatch greater than expected hatch) or HI activity (actual hatch less than expected hatch) in either Fig. 4 or Fig. 5. Asterisks indicate that the activity is significant (P<0.05).

Of the zones, only the earliest-eluting HI peak (G:Kav 0) was not resolved by Sephadex G-10. Two of the HS zones (A:Kav 0.68 - 1.14; and E: Kav 2.40-2.93) were broad and may contain more than one HS.

Thus, we have identified host chemicals which can stimulate the level of hatch induced by the HFs in PRL (HSs). The significant effect on PRL-induced hatch suggests synergism between HFs in the case of HS A and HS B, where HF activity is present in these fractions and stimulation in the case of HSs D, E and F, where there is no significant HF activity in these fractions as shown in Fig. 3.

Example 3

To study the effect on HIs and HSs on a single HF, the artificial HF picrolonic acid was used as the "positive control spike" instead of PRL as shown in Fig. 5.

Fig. 5 represents HI and HS activities (using picrolonic acid as standard) following Sephadex G-10 fractionation of PRL: bars represent actual hatching activity (PRL fraction + picrolonic acid aliquot only). Bracketed fractions with letters represent zones of HS activity (actual hatch greater than expected hatch) or zones of HI activity (actual hatch less than expected hatch) in either Fig. 4 or Fig. 5. Asterisks indicate that the activity is significant (P<0.05).

A total of four significant HI zones were detected with the picrolonic acid "spike": three of the four zones of HI activity detected using a PRL spike (G:Kal 0 : J : 0.46 : L: 1.93-2.07 and M: 2.28) (Fig. 4) were also observed using a picrolonic acid spike but only the fractions eluting at Kav 1.93-2.07 (L) significantly inhibited picrolonic acid-induced hatch. Two of the additional zones of significant hatch inhibition in the presence of picrolonic acid (H: Kav 0.28 and K: Kav 1.57) were also detected in the presence of PRL (Fig. 4), although inhibition was not significant. One zone, inhibitory in the presence of picrolonic acid, Kav 2.78-2.85 (N) Fig. 5) corresponded to a zone of HS activity in the presence of PRL which would have masked any HI effect (Fig. 4).

The HS activities of the ex-Sephadex fractions of PRL were quite different, depending on whether the positive control was PRL (Fig. 4) or picrolonic acid (Fig. 5), with the former producing the more complex profile. In Fig. 4, HS A (Kav 0.68-1.14) was broad and appeared to contain more than one HS. In Fig. 5, where HS zone A appeared to correspond to HS A in Fig. 4 which contained three possible HSs: HS A in Fig. 5 is shorter than in Fig. 4 due possibly to the action of HI J interfering with the activity of the first two fractions. This permits the proposal of an hypothesis, that HSs are HF-specific; stimulating hatch induced by certain PRL HFs but not by picrolonic acid.

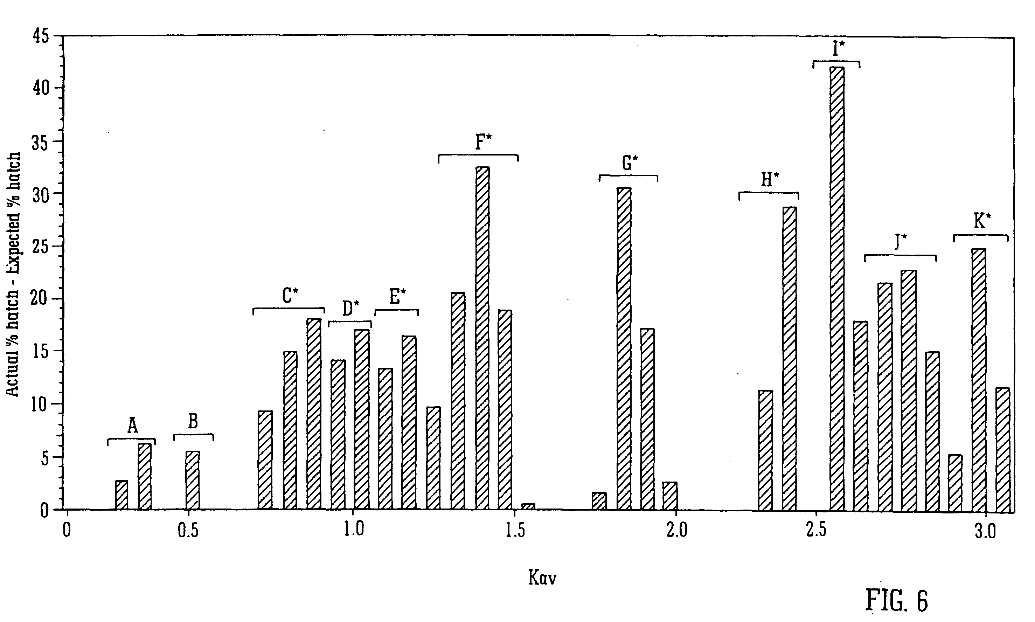

Fig. 6 shows HS activities (using PRL as standard) in the absence of HF and HI activities following Sephadex G-10 fractionation of PRL. In Fig. 6 the bars represent actual % J2 hatch (PRL fraction + PRL aliquot) minus expected % J2 hatch ([PRL fraction only] + [PRL aliquot only]). The bracketed fractions with letters represent zones of HS activity and the asterisks indicate that actual hatching is significantly greater (P<0.05) than expected hatch.

Example 4

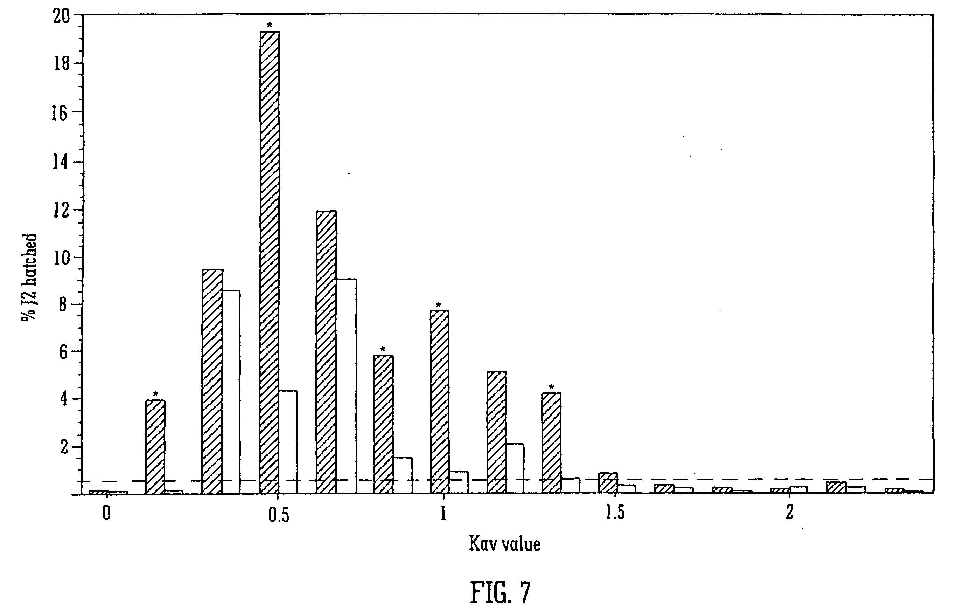

To assess which components of PRL were stimulated by HSs, one of the HS preparations (E: Kav 2.40-2.53; hatch-inactive but capable of greatly stimulating PRL-induced hatch) was incubated with individual PRL fractions and the resulting activity compared to that in fractions incubated with buffer as shown in Fig. 7.

Fig. 7 shows the effect on hatching activity of addition of PRL HS E. (Kav 2.45-2.53) to fractions following elution of PRL from Sephadex G-10: fraction + HS (■), fraction + buffer control (□). The broken line represents hatch in the presence of the elution buffer. Asterisks indicate PRL fractions where hatching activity was significantly (P<0.05) increased in the presence of HF E compared to the corresponding controls.

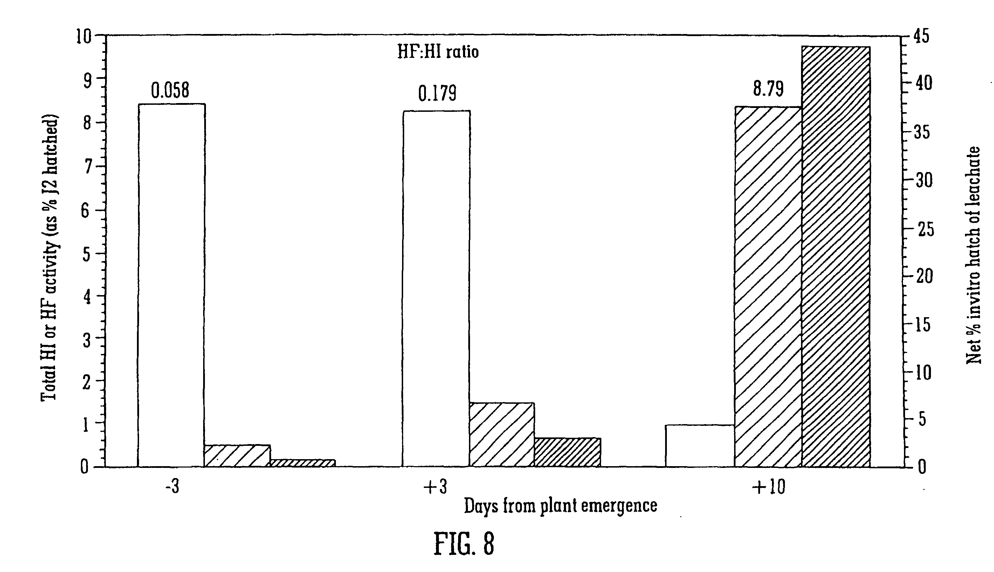

The addition of HS resulted in increased hatching activity only in those fractions which also exhibited hatching activity in the absence of HS (Fig. 8).

Fig. 8 shows total HI (□) activity and HF activity (▨) for leachates collected three days before (-3) and three (+3) and ten days (+10) after plant emergence of potato cv. Kerr's Pink. Net *in vitro % * hatch (■) represents the mean percentage of J2 hatched over a 1000-fold dilution range.

The activity of each of the HFs was stimulated by the HS. although differences were observed in the response of individual HF peaks. This result supports the results obtained in Example 3 for a HF-specific mode of action of HSs, where activities of PRL HFs but not picrolonic acid were stimulated.

To determine whether the *in vitro* activity of His in PRL reflected the situation in soil, the HF and HI assays were conducted on fractions resolved by Sephadex G-10 chromatography or PRL collected from plants of potato cv. Kerr's Pink, 3 days before, 3 days after and 10 days after plant emergence.

Twenty five sprouted tubers of potato cv. Kerr's Pink were planted in a box (90 x 90cm) of washed gravel. Nutrient solution was applied as described by Twomey, U. *et al.* ((1995) *supra*). Root leachate was collected (Twomey, U. *et al.* ((1995) *supra)* each day from one day after planting until two weeks after emergence of the sprouts above the gravel. Leachates collected three days before (-3), three (+3) and ten days after (+10) sprout emergence were concentrated 20 times and 1ml of each leachate was applied to the Sephadex G-10 column. Each fraction was assayed for HF and HI activity and the total HF activity and HI activity of each leachate was presented as the sum of the fraction activities above and below, respectively, the appropriate control value (running buffer for HF, picrolonic acid for HI). The net hatching activity of each leachate was also determined on the unfractionated PRL and the mean percentage hatch induced by undiluted PRL, 1:10, 1:100 and 1:1000 dilutions was calculated.

It was apparent that the HF:HI ratio of the PRL increased with plant age and paralleled the increase in net hatching activity of the PRL (Fig. 7). These results suggest that the in-soil inhibition of PCN hatch under young potato plants (Fig. 2) may have been a consequence of the low HF:HI ratio of the PRL produced by these plants. As the plants aged, HF production increased, resulting in a net increase in hatch, both *in vitro* and in-soil.

Example 5

Interactions between hatching chemicals

The presence within PRL of HFs, HSs and HIs, and the interactions between HFs and both HIs and HSs (Figs. 4 and 5) and between individual HFs demonstrates the complex nature of the mechanism by which hatching chemicals in PRL influence hatching of PCN. To investigate these interactions further, the response of PCN hatch to a dilution series of single natural potato-produced HFs (the glycoalkaloids α-solanine and α-chaconine: Devine, K.J. *et al*. ((1996) *supra*) was studied in the presence and absence of a PRL preparation, the concentration of the latter being adjusted to that used in Figs. 4 and 5.

Logarithmic dilution series ($10^2$ to $10^{10}$M) of the glycoalkaloids α-chaconine and α-solanine (Sigma Chemical Co. Poole, UK) were each prepared either in water or PRL (1mg ml$^{-1}$). Hatching activity was determined in these dilution series, with PRL (1mg ml$^{-1}$) and water as controls.

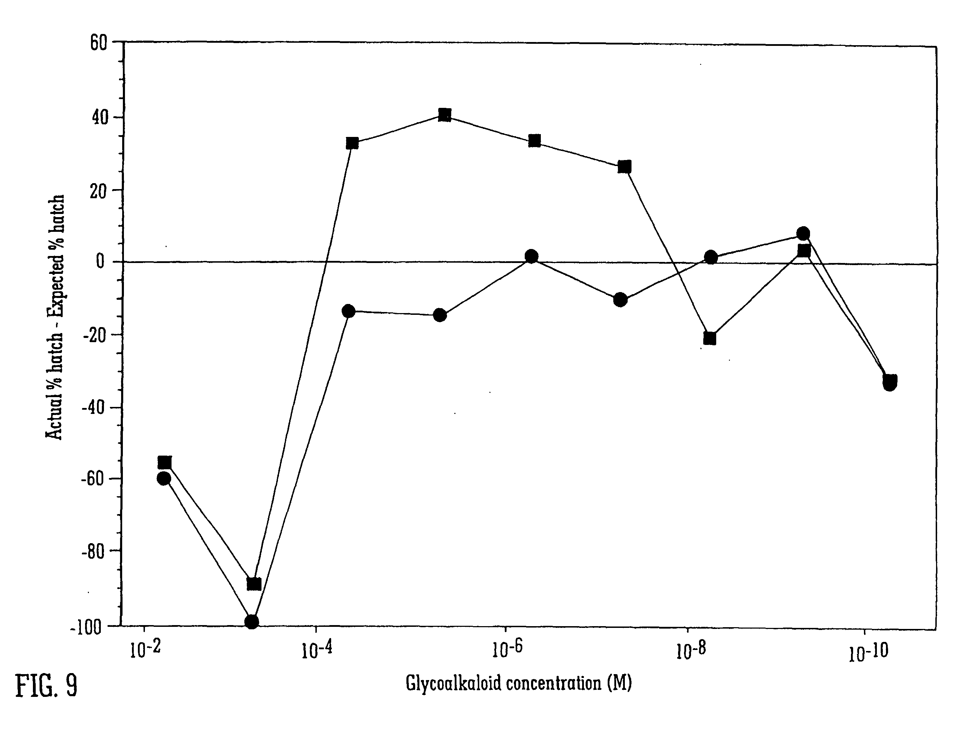

At each glycoalkaloid concentration, the hatching activity of (glycoalkaloid only), (PRL only) and (glycolalkaloid + PRL) preparations was determined. The difference between the observed hatch (in the presence of (glycoalkaloid only), (PRL only) and (glycoalkaloid + PRL) and the expected hatch if the effects of the glycoalkaloid and PRL were additive, (i.e. (glycoalkaloid only)) + (PRL only) was determined at each concentration of glycoalkaloid. The results are depicted in Fig. 9.

Fig. 9 illustrates the effect on hatching activity of a PRL aliquot on addition of a dilution series of α-solanine (■) or α-chaconine (●). The effect is expressed as actual, i.e. (PRL + α-solanine or α-chaconine) hatch minus expected hatch, i.e. [(PRL only) + (α-solanine or α-chaconine only) hatch. A positive sign indicates stimulation and a negative sign indicates inhibition of hatch.

At high concentrations of α-solanine, hatching activity of PRL was markedly inhibited, presumably as a result of the phenomenon of supra-optimal hatch inhibition which was reported by Devine, K.J. *et al.* ((1996) *supra),* suggesting that α-solanine and other HFs present in PRL bind at the same receptor site on the eggshell membrane. At lower concentrations, α-solanine interacted synergistically with PRL, resulting in increased hatch over a concentration range covering four orders of magnitude. The other glycoalkaloid, α-chaconine, produced a similar dosage-response profile, though with a smaller effect than that achieved with α-solanine.

The presence of three distinct but interactive classes of hatching chemicals in PRL makes interpretation of hatching data from PRL experiments more difficult. While data, such as those shown in Fig. 2, suggest that net *in vitro* hatching activity of PRL (presumably the resultant effect of HF, HI and HS activities) reflects in-soil hatching activity, studies on these hatching chemicals would be facilitated if a technique was developed which could assay the activity of each chemical in the absence of the other two.

Recognition that HIs and HSs are leached from potato tissue may help explain, in greater detail, aspects of the potato-PCN interaction, such as the sub-spontaneous levels of in-soil hatch under very young plants (Fig. 2).

Similar results were obtained for *G. pallida.*

Example 6

Temperature stability of the hatching activity of a PRL preparation

The temperature stability of the hatching activity of a potato root diffusate preparation was determined in the following way.

Aliquots (1ml, replicated 4 times) of a PRL preparation, with concentration adjusted to induce optimal *in vitro* hatch of both PCN species in a 3-week assay, were incubated in water baths set at selected incubation temperatures (30°, 45°, 60°, 75°, 90°C). The aliquots were allowed to adjust to the requisite temperature and then incubated for ten minutes, before being returned to a water bath at 22°C to re-equilibrate. The control aliquots were maintained at 22°C for the duration of the experimental period.

Single-generation cysts (300-500um) of *G. pallida* (pathotype Pa2/3) and *G. rostochiensis* (Rol), pre-soaked for 1 week at 22°C on water-soaked filter paper, were then incubated (5 cysts per 70μl sample of each replicate PRL aliquot) in the well of a flat-bottomed microtitre plate at high humidity in the dark at 22°C for 3 weeks. The number of hatched juveniles was counted at the end of the test period. The percentage hatch was determined from the number of hatched juveniles and the mean number of unhatched juveniles in the pre-soaked cysts before incubation.

$$\% \text{ hatch} = \frac{\text{(mean number of hatched juveniles per cyst after incubation) x 100}}{\text{(mean number of unhatched juveniles } per \text{ cyst before incubation)}}$$

Table 1 illustrates the temperature stability of hatching activity of potato root diffusate preparation.

Table 1

| Effect of exposure of PRL preparation to elevated temperatures for ten minutes | | | |
|---|---|---|---|
| Treatment | Hatching activity (%PCN hatch after 3 weeks) | | |
| | *G. rostochiensis* | | *G. pallida* |
| Control | 83.1 | | 72.8 |
| 30°C | 85.6 | | 70.1 |
| 45°C | 79.4 | | 76.3 |
| 60°C | 81.3 | | 75.1 |
| 75°C | 80.7 | | 68.7 |
| 90°C | 79.2 | | 74.0 |
| LSD (p 0.05) | | 8.5 | |

Example 7

Effect of pH on the hatching activity of HF preparation

An aliquot of HF preparation, prepared as described in Example 2, was incubated at 30°C for 7 days in a equal volume of the citrate-phosphate-borate buffer at each of the following pH values: 5, 6, 7, 8, 9 and 10.
Following incubation, any salts were removed by passage of the solution through Amberlite XAD-4 exchange resin and washing with water. The HFs were eluted using 100% methanol.
The hatching activity (as % hatch of viable eggs) of the HF preparations towards both PCN species was determined over a 3-week period. The treatments were replicated 6 times. The hatching activity assay was conducted according to the procedure outlined in Example 6.
Table 2 illustrates the effect of pH values above 9 on the hatching activity of the hatching factor preparation.

Table 2

| | % hatch | |
|---|---|---|
| pH | *G. rostochiensis* | *G. pallida* |
| 5 | 89.2 | 80.5 |
| 6 | 82.5 | 82.5 |
| 7 | 88.3 | 85.1 |
| 8 | 80.1 | 79.5 |
| 9 | 51.4 | 32.5 |
| 10 | 2.5 | 1.1 |
| LSD (p0.05) | 8.7 | 9.3 |

Example 8

In field PCN control by soil application of HF preparation

A field site with a natural infestation of predominantly *G. pallida* PA2/3 was analysed and an average PCN content of 35.6 viable eggs *per* g soil was determined (using the Meldola's Blue method).
For each of the six PRL concentrations (0-100g HF-equivalent *per* hectare), four replicate plots (each 40m$^2$) randomised within the experimental area were selected. Eight soil cores to 20cm depth were taken from each plot and the cysts were removed using an elutriator. The mean viable juvenile content of the soil in that plot was determined. The required quantity of PRL, dissolved in water, was applied (in 5 litres of water) to each plot using a backpack sprayer. It was then rotavated into the soil to a depth of 25cm.
After a period of eight weeks, sixteen soil cores were taken from each plot and the cysts were harvested using an elutriator. The mean content of viable unhatched juvenile nematodes in the plot was determined using the Meldola's Blue method.

$$\% \text{ concentration} = \frac{(\text{no. of viable unhatched juveniles per g soil after incubation}) \times 100}{(\text{no. of viable unhatched juveniles per g soil before incubation})}$$

The results are shown in Table 3.

Table 3

| HF dosage (g HF-equivalent *per* hectare) | % control of PCN at 8 weeks (compared to 0 week values) |
|---|---|
| 0 | 13.3 |
| 1.0 | 48.9 |
| 3.0 | 56.0 |
| 10.0 | 57.3 |

Table 3  (continued)

| HF dosage (g HF-equivalent *per* hectare) | % control of PCN at 8 weeks (compared to 0 week values) |
|---|---|
| 30.0 | 72.1 |
| 100 | 51.1 |
| Note: The values above represent a percentage decrease in PCN population. The concentration of HF preparation used is an estimate of the concentration of HFs in PRL preparation, not the amount of PRD used. The concentration of HF equivalents is estimated from data (total weight of HFs purified *per* 1 PRL purification). | |

## Claims

1. A hatch-inactive stimulating agent capable of stimulating hatching factor-induced hatch in potato cyst nematodes, obtainable from the root leachate of plants of the Solanaceae family by fractionation on a Sephadex G-10 column and having a Kav distribution coefficient in the range of 0.5 to 3.0.

2. A stimulating agent according to Claim 1, which is obtainable from potato root leachate.

3. A stimulating agent according to Claim 1, which is obtainable from tomato root leachate.

4. A stimulating agent according to any preceding claim, the Kav distribution coefficient of which, following elution from a Sephadex G-10 column, is within the range 0.5 to 3.0.

5. A hatching factor preparation for use in the control of potato cyst nematode which contains one or more hatching factor(s) and a stimulating agent according to any one of Claims 1-4, but which is free of any hatching inhibitors, said hatching inhibitors being removed from the leachate by passage of the leachate through polyvinylpoly-pyrrolidone followed by removal of any hatch-inhibitory levels of inorganic salts from the eluate.

6. A preparation according to Claim 5, wherein the hatching factor is selected from a glycoalkaloid and a terpenoid.

7. A preparation according to Claim 5 or 6, which is stable at a temperature greater than about 35°C.

8. A preparation according to any one of Claims 5-7, which is stable at a temperature of greater than 60°C.

9. A preparation according to any one of Claims 5-8, the activity of which is reduced at a pH above about 9.0, relative to its activity at a pH in the range 5.0 - 8.0.

10. A preparation according to any one of Claims 5-9, which is capable of achieving a maximum kill of 70-80% of a viable potato cyst nematode egg population when the preparation is applied to a locus at a concentration of 5-30g *per* hectare, more especially 10-20g *per* hectare.

11. A preparation according to any one of Claims 5-10, wherein the species of potato cyst nematode is *Globodera rostochiensis* and the hatching factor is a glycoalkaloid hatching factor and/or a terpenoid hatching factor having a molecular weight of 530.

12. A preparation according to any one of Claims 5-10, wherein the species of potato cyst nematode is *Globodera pallida* and the hatching factor is a terpenoid hatching factor having a molecular weight of 279.

13. A method of controlling potato cyst nematodes, which comprises applying to a locus of potato cyst nematode infestation a preparation according to any one of Claims 5-12.

## Patentansprüche

1. Ein schlupfneutrales Stimulierungsmittel, welches fähig zur Stimulierung des Schlüpffaktor induzierten Schlupfs bei Kartoffelzystennematoden ist, erhältlich aus dem Wurzeldiffusat von Pflanzen der Familie der Solanaceae durch Fraktionierung an einer Sephadex-G-10-Säule und welches einen Kav-Verteilungskoeffizienten im Bereich von 0,5 bis 3,0 besitzt.

**2.** Ein Stimulierungsmittel gemäß Anspruch 1, welches aus Kartoffelwurzeldiffusat erhältlich ist.

**3.** Ein Stimulierungsmittel gemäß Anspruch 1, welches aus Tomatenwurzeldiffusat erhältlich ist.

**4.** Ein Stimulierungsmittel gemäß irgendeinem vorangegangenen Anspruch, dessen Kav-Verteilungskoeffizient, der Elution von einer Sephadex-G-10-Säule folgend, im Bereich von 0,5 bis 3,0 liegt.

**5.** Eine Schlüpffaktorzubereitung zur Verwendung bei der Kontrolle der Kartoffelzystennematode, welche einen oder mehrere Schlüpffaktoren und ein Stimulierungsmittel gemäß irgendeinem der Ansprüche 1-4 enthält, welches jedoch frei von jedweden Schlüpfinhibitoren ist, wobei besagte Schlüpfinhibitoren vom Diffusat durch Passage des Diffusats durch Polyvinylpolypyrrolidon, gefolgt von der Entfernung jedweder schlupfinhibitorischer Anteile anorganischer Salze aus dem Eluat, entfernt werden.

**6.** Eine Zubereitung gemäß Anspruch 5, wobei der Schlüpffaktor aus einem Glycoalkaloid und einem Terpenoid gewählt wird.

**7.** Eine Zubereitung gemäß Anspruch 5 oder 6, welche bei einer Temperatur von mehr als ungefähr 35 °C stabil ist.

**8.** Eine Zubereitung gemäß irgendeinem der Ansprüche 5-7, welche bei einer Temperatur von mehr als 60 °C stabil ist.

**9.** Eine Zubereitung gemäß irgendeinem der Ansprüche 5-8, deren Aktivität bei einem pH oberhalb von etwa 9,0, bezogen auf deren Aktivität bei einem pH im Bereich 5,0-8,0 verringert ist.

**10.** Eine Zubereitung gemäß irgendeinem der Ansprüche 5-9, welche fähig ist, eine maximale Tötung von 70-80 % einer lebenden Kartoffelzystennematodeneierpopulation zu erzielen, wenn die Zubereitung in einer Konzentration von 5-30 g pro Hektar, ganz besonders 10-20 g pro Hektar auf einen Ort aufgebracht wird.

**11.** Eine Zubereitung gemäß irgendeinem der Ansprüche 5-10, wobei die Art der Kartoffenzystennematoden *Globodera rostochiensis* ist und der Schlüpffaktor ein Glycoalkaloidschlüpffaktor und/oder ein Terpenoidschlüpffaktor mit einem Molekulargewicht von 530 ist.

**12.** Eine Zubereitung gemäß irgendeinem der Ansprüche 5-10, wobei die Art der Kartoffelzystennematode *Globodera pallida* ist und der Schlüpffaktor ein Terpenoidschlüpffaktor mit einem Molekulargewicht von 279 ist.

**13.** Ein Verfahren zur Kontrolle von Kartoffelzystennematoden, welches das Aufbringen einer Zubereitung gemäß irgendeinem der Ansprüche 5-12 auf einen Ort der Kartoffelzystennematodeninfestation umfaßt.

**Revendications**

**1.** Agent de stimulation inactif vis-à-vis de l'éclosion capable de stimuler l'éclosion induite par des facteurs d'éclosion chez les nématodes à kyste de la pomme de terre, pouvant être obtenu à partir d'exsudat de racine de plantes de la famille des Solanacées par fractionnement sur une colonne de Sephadex G-10 et ayant un coefficient de distribution Kav compris dans une gamme de 0,5 à 3,0.

**2.** Agent de stimulation selon la revendication 1, pouvant être obtenu à partir d'exsudat de racine de pomme de terre.

**3.** Agent de stimulation selon la revendication 1, pouvant être obtenu à partir d'exsudat de racine de tomate.

**4.** Agent de stimulation selon l'une des revendications précédentes, dont le coefficient de distribution Kav, suite à une élution à partir d'une colonne de Sephadex G-10, est compris dans une gamme de 0,5 à 3,0.

**5.** Préparation de facteur d'éclosion utilisable pour la régulation du nématode à kyste de la pomme de terre contenant un ou plusieurs facteur(s) d'éclosion et un agent de stimulation selon l'une des revendications 1 à 4, mais ne contenant pas d'inhibiteurs d'éclosion, lesdits inhibiteurs d'éclosion étant retirés de l'exsudat par passage de l'exsudat sur de la polyvinylpoly-pyrrolidone suivi du retrait à partir de l'éluat de tous les sels inorganiques présents à des niveaux inhibant l'éclosion.

6. Préparation selon la revendication 5, dans laquelle le facteur d'éclosion est choisi parmi un glycoalcaloïde et un terpénoïde.

7. Préparation selon la revendication 5 ou 6, stable à une température supérieure à environ 35°C.

8. Préparation selon l'une des revendications 5 à 7, stable à une température supérieure à 60°C.

9. Préparation selon l'une des revendications 5 à 8, dont l'activité est réduite à un pH supérieur à environ 9,0, par rapport à son activité à un pH compris dans une gamme de 5,0 à 8.

10. Préparation selon l'une des revendications 5 à 9, capable de provoquer une mortalité maximum de 70 à 80% dans une population viable d'oeufs de nématodes à kyste de la pomme de terre lorsque la préparation est appliquée en un lieu à une concentration de 5 à 30 g par hectare, plus particulièrement de 10 à 20 g par hectare.

11. Préparation selon l'une des revendications 5 à 10, dans laquelle l'espèce de nématodes à kyste est *Globodera rostochiensis* et le facteur d'éclosion est un facteur d'éclosion glycoalcaloïdique et/ou un facteur d'éclosion de type terpénoïde ayant un poids moléculaire de 530.

12. Préparation selon l'une des revendications 5 à 10, dans laquelle l'espèce de nématodes à kyste est *Globodera pallida* et le facteur d'éclosion est un facteur d'éclosion de type terpénoïde ayant un poids moléculaire de 279.

13. Méthode de régulation des nématodes à kystes de la pomme de terre, comprenant l'application d'une préparation selon l'une des revendications 5 à 12 en un lieu infesté par un nématode à kyste de la pomme de terre.

FIG. 1A

EP 1 085 812 B1

FIG. 1B

FIG. 1C

EP 1 085 812 B1

FIG. 1D

EP 1 085 812 B1

FIG. 1E

EP 1 085 812 B1

FIG. 1F

EP 1 085 812 B1

FIG. 1G

EP 1 085 812 B1

FIG. 1H

FIG. 1I

EP 1 085 812 B1

FIG. 1J

FIG. 2

EP 1 085 812 B1

FIG. 3

EP 1 085 812 B1

FIG. 4

EP 1 085 812 B1

FIG. 5

FIG. 6

EP 1 085 812 B1

FIG. 7

FIG. 8

FIG. 9

EP 1 085 812 B1